# EUROPÄISCHE PATENTSCHRIFT

(11) **EP 0 591 644 B1**
(45) Veröffentlichungstag und Bekanntmachung des Hinweises auf die Patenterteilung: **16.04.1997**
(21) Anmeldenummer: 93112739.3
(22) Anmeldetag: 09.08.1993
(51) Int. Cl.: B60J 7/04

(54) **Fahrzeugdach mit einer Folge von Lamellen**
Vehicle roof with sequence of lamellas
Toit de véhicule avec suite à lamelles

(30) Priorität: 06.10.1992 DE 4233507
(43) Veröffentlichungstag der Anmeldung: 13.04.1994
(73) Patentinhaber: WEBASTO KAROSSERIESYSTEME GmbH, D-82131 Stockdorf (DE)
(72) Erfinder: Reinsch, Burkhard, D-82061 Neuried (DE); Reihl, Peter, D-82319 Starnberg (DE); Schreiter, Thomas, D-81373 München (DE); Jardin, Hans, D-82266 Inning (DE)
(74) Vertreter: Wiese, Gerhard

(56) Entgegenhaltungen:
- DE-A- 2 403 739
- DE-A- 3 202 646
- DE-C- 3 532 150
- DE-C- 4 127 624
- DE-U- 1 811 690
- FR-A- 1 512 575
- GB-A- 573 355

## Beschreibung

Die Erfindung bezieht sich auf ein Fahrzeugdach mit einer Folge von Lamellen zum wahlweisen Verschließen oder mindestens teilweisen Freigeben einer Dachöffnung in einer festen Dachfläche, wobei die Lamellen in der Schließstellung aneinander anstoßen und einen flächigen Lamellenverbund bilden, innerhalb dessen jede Lamelle beidseits an zwei in Verschieberichtung in Abstand voneinander liegenden Führungsstellen entlang von dachfesten Führungen derart geführt ist, daß beim Verstellen der Lamellen der flächige Lamellenverbund eine Translationsbewegung ausführt, im Zuge deren der Verbund an seinem hinteren Ende Lamelle für Lamelle beim Öffnen des Daches aufgelöst bzw. beim Schließen des Daches wiederhergestellt wird, und wobei mindestens die vorderen Führungsstellen der Lamellen mit einer den Lamellen gemeinsam zugeordneten Führungsbahn zusammenwirken.

Bei einem bekannten Fahrzeugdach dieser Art (DE-U-1 811 690) werden die beiden Führungsstellen jeder Lamelle von Zapfen gebildet, die jeweils von einer an der Unterseite der betreffenden Lamelle angebrachten Führungswange seitlich abstehen. Die beiden Zapfen liegen in unterschiedlicher Höhe und greifen in parallel in Abstand voneinander liegende Führungsbahnen einer dachfesten Führungsschiene ein. Beim Öffnen des Daches verlassen die jeweils in Öffnungsrichtung vorne liegenden Zapfen nacheinander die zugehörige Führungsbahn, während gleichzeitig die betreffende Lamelle in nicht näher offenbarter Weise zu einer Schwenkbewegung um den anderen, in seiner Führungsbahn verbleibenden Zapfen veranlaßt wird. Bei dem bekannten Fahrzeugdach läßt die Stabilität insbesondere dann sehr zu wünschen übrig, wenn das Dach mindestens teilweise geöffnet ist.

Es ist ferner ein Lamellen-Fahrzeugdach bekannt (DE-C-35 32 150), bei welchem die Lamellen zum Öffnen des zuvor geschlossenen Daches über einen Spindelantrieb zunächst gemeinsam in eine nach oben ausgestellte Lage verschwenkt und dann nach hinten zusammengeschoben werden. Bei diesem Dach wird infolgedessen der flächige Lamellenverbund als Ganzes sofort aufgelöst, wenn das Dach geöffnet werden soll. Dies ist aerodynamisch ungünstig. Bereits bei relativ niedriger Fahrgeschwindigkeit können störende Windgeräusche auftreten.

Bei einem anderen bekannten Fahrzeugdach (GB-A-573 355) ist eine Folge von Lamellen vorgesehen, denen jeweils in unterschiedlicher Höhe liegende Längsführungsbahnen zugeordnet sind, entlang deren die Lamellen über Gelenkparallelogramme verschiebbar geführt sind. Zum Öffnen des zuvor geschlossenen Daches lassen sich die Lamellen in unterschiedliche Höhenlagen bringen und dann zusammenschieben. Ein Verstellen der Lamellen ist nicht vorgesehen. Mindestens ein der Breite einer Lamelle entsprechender Teil der Dachöffnung bleibt infolgedessen verschlossen.

Bei einem anderen bekannten Lamellen-Fahrzeugdach (FR-A 1 512 575) ist jede der Lamellen beidseitig in einer eigenen Führungsbahn geführt. Die Führungsbahnen haben entsprechend dem Verschiebeweg der einzelnen Lamellen unterschiedliche Länge; sie liegen übereinander und steigen von hinten nach vorne rampenförmig an. Über Scherenarme sind die Lamellen so untereinander verbunden, daß sie beim Verstellen gleichzeitig ihre Relativlage zu der jeweils benachbarten Lamelle ändern.

Ein Fahrzeugdach der eingangs genannten Art, bei dem zur Erhöhung der Stabilität und zur sicheren Halterung der Lamellen beide Führungsstellen der Lamellen im gesamten Lamellen-Verstellbereich mit den Führungen in Eingriff gehalten sind, ist in der DE-Patentanmeldung P 41 23 229.1 (DE-A-4 123 229) beschrieben.

Der Erfindung liegt die Aufgabe zugrunde, ein Fahrzeugdach zu schaffen, das sich in sämtlichen Dachstellungen durch hohe Stabilität und sichere Halterung der Lamellen auszeichnet und das ein aerodynamisch günstiges Verhalten selbst bei relativ hohen Fahrgeschwindigkeiten hat, ohne daß auf ein Freilegen eines beträchtlichen Teils der Dachöffnung verzichtet werden muß. Das Fahrzeugdach soll ferner ästhetisch besonders ansprechend gestaltet werden können.

Bei einem Fahrzeugdach mit den Merkmalen des Oberbegriffs des Patentanspruchs 1 wird diese Aufgabe erfindungsgemäß dadurch gelöst, daß beide Führungsstellen der Lamellen im gesamten Lamellenverstellbereich mit den dachfesten Führungen in Eingriff gehalten sind, und daß die dachfesten Führungen derart ausgebildet und mit Bezug auf die feste Dachfläche angeordnet sind, daß die Lamellen beim Öffnen des Daches unter den an die Dachöffnung nach hinten anschließenden festen Dachteil tauchen.

Durch diese Ausbildung wird eine besonders stabile Halterung der Lamellen in sämtlichen Betriebsstellungen des Daches gewährleistet. Auch bei teilweise oder voll geöffnetem Dach ragen die verschiebbaren Lamellen nicht über die Umrißlinie des Daches vor. Dies ist sowohl im Hinblick auf das aerodynamische Verhalten als auch das äußere Erscheinungsbild des Fahrzeuges besonders günstig.

Weitere Ausgestaltungen der Erfindung ergeben sich aus den Unteransprüchen.

Zweckmäßig sind die dachfesten Führungen so gestaltet, daß die Lamellen bei geöffnetem Dach in zueinander mindestens näherungsweise parallelen Ebenen liegen. Die Verstellmechanik läßt sich besonders einfach halten, wenn die Anordnung so getroffen ist, daß bei geöffnetem Dach die in Dachschließstellung hinterste Lamelle zuunterst und die in Dachschließstellung vorderste Lamelle zuoberst liegt.

Vorzugsweise sind die Lamellen bei geöffnetem Dach einander überlappend in Fahrtrichtung derart gegeneinander versetzt, daß die in Dachschließstellung hinterste Lamelle am weitesten hinten und die in Dachschließstellung vorderste Lamelle am weitesten vorne liegt. Eine solche Auslegung sorgt dafür, daß bei geöffnetem Dach die Lamellen Stellungen einnehmen, in welchen sie die Nutzung des Fahrzeuginnenraums besonders wenig stören.

Die Verstellmechanik kann so ausgelegt sein, daß mindestens ein Teil der Lamellen mit einem Dachantrieb in Abhängigkeit von der Lamellenstellung selbsttätig kuppelbar bzw. von dem Dachantrieb selbsttätig abkuppelbar ist, wie dies in der DE-Patentanmeldung P 41 23 229.1 (DE-A-4 123 229) im einzelnen erläutert ist. In einem solchen Fall lassen sich die Lamellen bei geöffnetem Dach zu einem Paket von relativ geringer Höhe stapeln.

Dagegen kann die Verstellmechanik besonders einfach gehalten werden, wenn dafür gesorgt ist, daß die Lamellen in ständiger Verbindung mit der Verstellmechanik (dem Dachantrieb) stehen. Um auch in einem solchen Fall eine störende Beeinträchtigung des Fahrzeuginnenraums bei geöffnetem Dach zu vermeiden, sind vorzugsweise die Lamellen bei geöffnetem Dach in gegenseitigem Höhenabstand jalousieartig vor der Heckscheibe angeordnet. Dabei kann vor der Hechscheibe eine durchsichtige Trennwand vorgesehen sein, die zusammen mit der Heckscheibe einen Raum begrenzt, innerhalb dessen sich die Lamellen bei geöffnetem Dach befinden.

Auch die hinteren Führungsstellen mindestens der bei geschlossenem Dach vor der hintersten Lamelle liegenden Lamellen können mit einer diesen Lamellen gemeinsam zugeordneten Führungsbahn zusammenwirken. Die vorderen Führungsstellen der Lamellen und die zugehörigen dachfesten Führungen liegen zweckmäßig tiefer als die hinteren Führungsstellen der Lamellen und die ihnen zugeordneten dachfesten Führungen.

Vorzugsweise ist mindestens die hinterste Lamelle zum Auflösen und Wiederherstellen des flächigen Lamellenverbunds um ihre vordere Führungsstelle schwenkbar gelagert. Dabei ist die Anordnung vorteilhaft so getroffen, daß beim Öffnen des Daches zunächst die hinterste Lamelle ausgehend von einer mit der nach hinten angrenzenden festen Dachfläche mindestens näherungsweise bündigen Stellung mit ihrem hinteren Bereich unter das Niveau der festen Dachfläche schwenkbar ist und dann der Lamellenverbund und die hinterste Lamelle nach hinten verschiebbar sind. Beim weiteren Öffnen des Daches kann zweckmäßig der restliche flächige Lamellenverbund jeweils zunächst nach hinten in eine spaltfreie Zwischenstellung verschiebbar sein, in welcher die jeweils letzte Lamelle des Verbundes mit der nach hinten angrenzenden festen Dachfläche mindestens näherungsweise bündig liegt, wobei vor einem weiteren Nachhintenschieben des restlichen flächigen Lamellenverbunds die jeweils letzte Lamelle zunächst mit ihrem hinteren Bereich unter das Niveau der festen Dachfläche schwenkbar ist. Auf diese Weise kann der flächige Lamellenverbund in Zwischenstellungen gebracht werden, in denen ein Spalt im Bereich der Hinterkante der Dachöffnung vermieden ist. Bei Verwendung eines manuellen Dachantriebs können diese spaltfreien Zwischenstellungen über eine Rastung ansteuerbar sein. Wird ein motorischer Dachantrieb vorgesehen, lassen sich die spaltfreien Zwischenstellungen zweckmäßig über eine Vorwahlsteuerung anfahren.

Im Bereich der Hinterkante der Dachöffnung kann aber auch eine, vorzugsweise mit einem aufweitbaren Dichtungsbalg ausgestattete, Dichtungsanordnung zum Abdichten des Spalts zwischen der festen Dachfläche und der Oberseite der Lamellen bei geöffnetem Dach und in Zwischenstellungen des Daches zwischen Schließ- und Offenstellung vorgesehen sein.

Bevorzugte Ausführungsbeispiele der Erfindung sind nachstehend unter Bezugnahme auf die beiliegenden Zeichnungen näher erläutert. Es zeigt:
- Fig. 1: eine schematische perspektivische Ansicht eines Fahrzeugdaches in halb geöffneter Stellung,
- Fig. 2: in größerem Maßstab eine Teilschnittansicht in dem in Fig. 1 mit II bezeichneten Bereich,
- Fig. 3: den Schnitt entlang der Linie III-III der Fig. 1,
- Fig. 4: eine schematische perspektivische Ansicht entsprechend Fig. 1, wobei das Dach jedoch im voll geöffneten Zustand dargestellt ist,
- Fig. 5: den Schnitt entlang der Linie V-V in Fig. 4,
- Fig. 6: in größerem Maßstab den Schnitt entlang der Linie VI-VI in Fig. 5,
- Fig. 7: eine schematische perspektivische Ansicht ähnlich Fig. 1 für eine abgewandelte Ausführungsform des Daches,
- Fig. 8: schematisch den Schnitt entlang der Linie VIII-VIII in Fig. 7,
- Fig. 9: eine schematische perspektivische Ansicht ähnlich Fig. 4 für eine weiter abgewandelte Ausführungsform des Fahrzeugdaches,
- Fig. 10: schematisch den Schnitt entlang der Linie X-X in Fig. 9,
- Fig. 11: in größerem Maßstab einen Schnitt entsprechend Fig. 10, der Einzelheiten der Lamellenführungen erkennen läßt, und
- Fig. 12: einen Teilschnitt entlang der Linie XII-XII in Fig. 11.

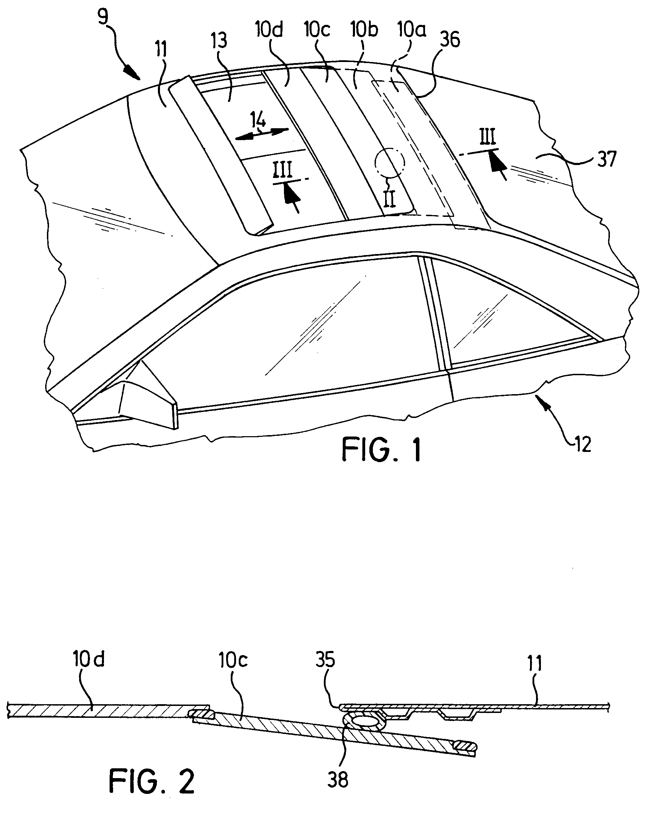

Das anhand der Fign. 1 bis 6 erläuterte, als Lamellendach zu bezeichnende Fahrzeugdach 9 weist eine Folge von Schiebelamellen 10a bis 10d auf. Diese Lamellen dienen dem wahlweisen Verschließen oder mindestens teilweisen Freigeben einer Dachöffnung 13, die in einer festen Dachfläche 11 eines Kraftfahrzeuges 12 ausgebildet ist. Zum Öffnen und Verschließen des Daches 9 lassen sich die Lamellen 10a bis 10d parallel zur Fahrzeuglängsachse verschieben, wie dies in Fig. 1 mit dem Doppelpfeil 14 angedeutet ist. In ihrer die Schließstellung bestimmenden vorderen Endstellung stoßen die Lamellen 10a bis 10d mit ihren quer zur Verschieberichtung 14 verlaufenden Längskanten dichtend aneinander an. Dabei bilden sie einen flächigen Lamellenverbund, wie dies in Fig. 1 für die beiden vorderen Lamellen 10c und 10d angedeutet ist. (Die vorliegend verwendeten Begriffe "vorne" und "hinten" beziehen sich auf die normale Fahrtrichtung des Fahrzeugs 12.)

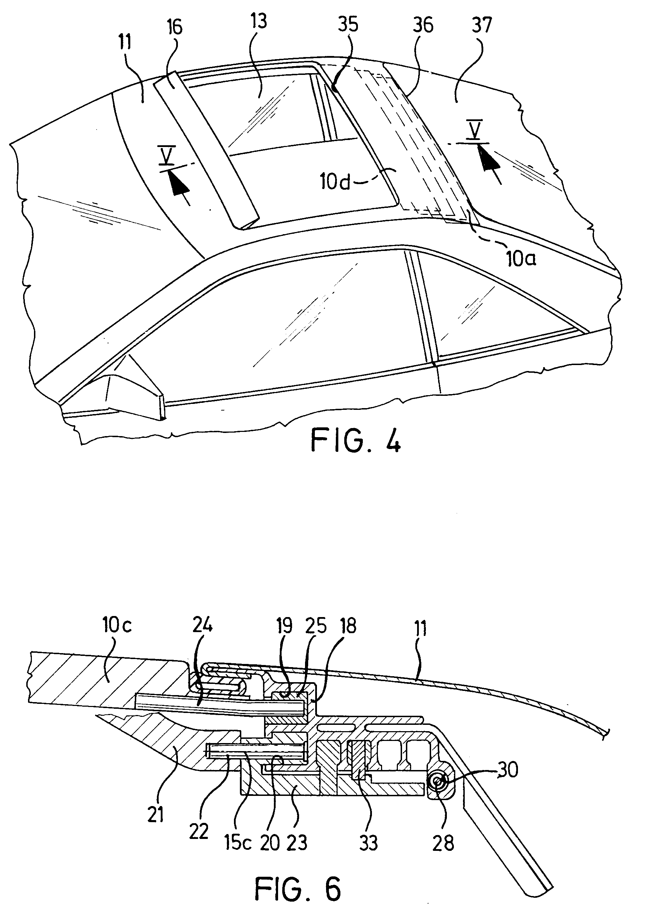

Eine vorliegend nicht im einzelnen erläuterte Verstellmechanik, die in der in der DE-Patentanmeldung P 41 23 229.1 (DE-A-4 123 229) beschriebenen Weise aufgebaut sein kann, koordiniert die Verstellbewegungen der einzelnen Lamellen 10a bis 10d derart, daß beim Verstellen der Schiebelamellen der flächige Lamellenverbund eine Translationsbewegung in der Verschieberichtung 14 ausführt, im Zuge deren der Verbund an seinem hinteren Ende Lamelle für Lamelle beim Öffnen des Daches aufgelöst bzw. beim Schließen des Daches wiederhergestellt wird. Beim Öffnen des zuvor geschlossenen Daches 9 wird dabei zunächst nur die hinterste Lamelle 10a so verschwenkt, daß sie mit ihrem hinteren Rand vom hinteren Rand der Dachöffnung 13 freikommt. Die Lamelle 10a kann dann beginnend in dieser Schräglage zusammen mit den übrigen, im flächigen Lamellenverbund verbleibenden, d.h. nicht ausgeschwenkten, Lamellen 10b bis 10d nach hinten verschoben werden, wobei die Lamelle 10a unter den an die Dachöffnung 13 nach hinten anschließenden festen Dachteil taucht. Während sich die hinterste Lamelle 10a in Richtung auf ihre in Fig. 1 angedeutete hintere Endstellung bewegt, löst sich in entsprechender Weise die nächste Lamelle 10b aus dem Lamellenverbund, um gleichfalls nach hinten unter die feste Dachfläche 11 zu tauchen. Sobald die betreffende Lamelle ihre hintere Endstellung erreicht hat, wird sie von dem Dachantrieb abgekuppelt. Dieser Vorgang wiederholt sich Lamelle für Lamelle, bis schließlich der in Fig. 4 veranschaulichte Zustand erreicht ist. Alle Lamellen 10a bis 10d sind zu einem Paket von relativ geringer Höhe unter dem hinteren Teil der festen Dachfläche gestapelt. Die Dachöffnung 13 ist vollständig freigelegt. Beim Schließen des Daches 9 werden die Lamellen nacheinander wieder mit dem Dachantrieb gekuppelt. Dabei wird ausgehend von der Offenstellung gemäß Fig. 4 zunächst nur die Lamelle 10d vorbewegt und in eine zur festen Dachfläche 11 parallele Lage zurückverschwenkt. Ein entsprechender Bewegungsablauf wird dann nacheinander für die folgenden Lamellen 10c bis 10a erzwungen, bis die Lamellen in flächigem Verbund in ihrer vorderen Endstellung stehen und die Dachöffnung 13 verschließen.

Bei der veranschaulichten Ausführungsform des Fahrzeugdaches 9 sitzt im Bereich des vorderen Endes der Dachöffnung 13 ein ausstellbarer, lamellenförmiger Windabweiser 16, der beim Einleiten des Öffnungsvorganges um eine quer zur Fahrzeuglängsachse verlaufende reale oder virtuelle Schwenkachse in eine schräg nach hinten ansteigende Lage verschwenkt wird. Der Windabweiser 16 legt sich in der Schließstellung des Daches 9 mit seiner Hinterkante gegen die Vorderkante der in der vorderen Endstellung stehenden Schiebelamelle 10d dichtend an. Er verschließt dabei den vordersten Teil der Dachöffnung 13. Gegebenenfalls kann die Auslegung aber auch so getroffen sein, daß der flächige Verbund der Lamellen 10a bis 10d in der Schließstellung von der Vorderkante bis zur Hinterkante der Dachöffnung 13 reicht und damit allein die Schließfunktion übernimmt. Dabei kann gegebenenfalls in für Schiebedächer an sich bekannter Weise (DE-A-23 25 594, DE-A-34 26 998 und DE-C-39 16 906) ein Windabweiser vorgesehen sein, der bei geschlossenem Dach unter der festen Dachfläche verschwindet und der selbsttätig in eine Arbeitsstellung übergeht, wenn das Dach geöffnet wird. In den Fign. 1 und 4 ist ein Fahrzeugdach mit vier Schiebelamellen 10a bis 10d dargestellt. Es versteht sich jedoch, daß die Anzahl der Schiebelamellen in Abhängigkeit von den jeweiligen Gegebenheiten, beispielsweise der Länge der Dachöffnung 13, grundsätzlich beliebig gewählt werden kann.

Wie im einzelnen aus Fig. 6 hervorgeht, weist das Fahrzeugdach 9 Führungsschienen 18 auf, die sich zu beiden Seiten der Dachöffnung 13 erstrecken und unter den an die Dachöffnung nach hinten anschließenden Teil der festen Dachfläche 11 reichen. Die Ausbildung ist zu beiden Seiten des Daches 9 im wesentlichen spiegelsymmetrisch zu einer Längsmittellinie, so daß die Darstellungen und Erläuterungen für die eine Dachseite sinngemäß auch für die andere Dachseite gelten. Die Führungsschiene 18 weist eine obere Führungsbahn 19 und eine untere Führungsbahn 20 auf. Beide Führungsbahnen 19 und 20 verlaufen in Fahrzeuglängsrichtung, und sie erstrecken sich im Bereich der Seitenkanten der Dachöffnung 13 mindestens näherungsweise parallel zueinander, wie dies insbesondere aus Fig. 5 hervorgeht. An jeder der Lamellen 10a bis 10d ist beidseits vorne ein nach unten abstehender Lenker 21 angebracht, von dem ein Lenkerbolzen 22 seitlich nach außen vorsteht. Jeder der Lenkerbolzen 22 greift in ein ihm zugeordnetes vorderes Führungslager 23 ein. Die vorderen Führungslager 23 der Lamellen 10a bis 10d sind entlang der unteren Führungsbahn 20 der Führungsschiene 18 verschiebbar geführt. Die quer zur Verschieberichtung 14 ausgerichteten Lenkerbolzen 22 bestimmen die Schwenkachsen 15a bis 15d der Lamellen 10a bis 10d.

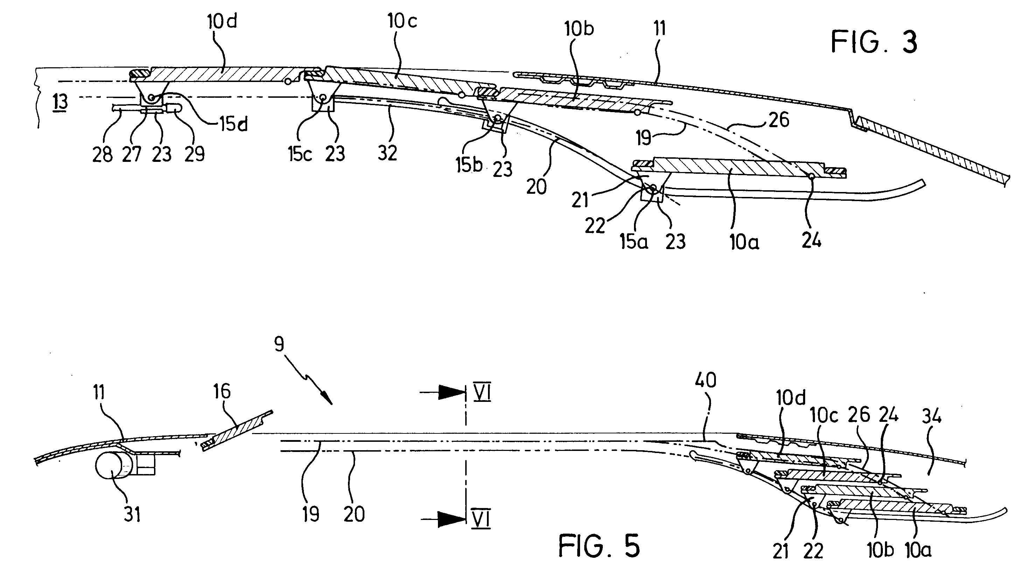

Im hinteren Bereich der Lamellen 10a bis 10d steht beidseits jeweils ein Führungsbolzen 24 ab. Die Führungsbolzen 24 der Lamellen 10b bis 10d sind über hintere Führungslager 25 entlang der oberen Führungsbahn 19 der Führungsschiene 18 verschiebbar geführt. Der Führungsbolzen 24 der hintersten Lamelle 10a wirkt über ein hinteres Führungslager 25 mit einer zusätzlichen Führungsbahn 26 der Führungsschiene 18 zusammen. Die Führungsbahn 26 verläuft, wie aus den Fign. 3 und 5 hervorgeht, in in wesentlichem gleichbleibendem Abstand oberhalb des hinteren Teils der oberen Führungsbahn 19. Die Führungsbolzen 24 aller Lamellen 10a bis 10d lassen auch eine Schwenkbewegung der zugehörigen Lamelle mit Bezug auf die Führungsschiene 18 um eine von dem betreffenden Führungsbolzen 24 bestimmte, quer zur Verschieberichtung 14 verlaufende Achse zu. Bei dem veranschaulichten Ausführungsbeispiel liegen die von den Lenkerbolzen 22 gebildeten vorderen Führungsstellen der Lamellen tiefer als die von den Führungsbolzen 24 gebildeten hinteren Führungsstellen der Lamellen, und die vorderen Führungsstellen sind von der Vorderkante der betreffenden Lamellen um einen vorbestimmten Abstand nach hinten versetzt, während die hinteren Führungsstellen von der hinteren Kante der zugehörigen Lamelle um einen vorbestimmten Abstand nach vorne versetzt angeordnet sind.

Das vordere Führungslager 23 der vordersten Schiebelamelle 10d weist eine Längsöffnung 27 auf, durch die das eine Ende eines Antriebskabels 28 hindurchgesteckt ist. Auf das über das Führungslager 23 nach hinten vorstehende Ende des Antriebskabels 28 ist eine Endkappe 29 aufgesetzt. Das Antriebskabel 28 und das vordere Führungslager 23 der vordersten Lamelle 10d sind auf diese Weise miteinander auf Mitnahme in der Lamellenverschieberichtung verbunden. Das Antriebskabel 28 ist mindestens im Bereich des betreffenden Seitenrandes der Dachöffnung 13 in einem Kabelführungskanal 30 der Führungsschiene 18 verschiebbar geführt (Fig. 6). Das vorzugsweise als Gewindekabel ausgebildete Antriebskabel 28 erstreckt sich durch den Kabelführungskanal 30 und gegebenenfalls ein daran anschließendes Führungsrohr zu einer Antriebseinheit 31, die im Ausführungsbeispiel gemäß Fig. 5 vor der Dachöffnung 13 unter der festen Dachfläche 11 sitzt. Die Antriebseinheit 31 kann in für Schiebedächer bekannter Weise einen Elektromotor und ein Untersetzungsgetriebe aufweisen. Dabei kann ein mit dem Ausgang des Untersetzungsgetriebes verbundenes Ritzel mit dem Antriebskabel 31 und einem entsprechenden Antriebskabel für die andere Dachseite in Eingriff stehen. Es versteht sich, daß statt eines Motorantriebs auch ein Handantrieb, z.B. über eine Handkurbel, vorgesehen sein kann.

Die vorderen Führungslager 23 der Lamellen 10a bis 10d stehen über flexible Verbindungsstangen 32, von denen in Fig. 3 nur eine dargestellt ist, in lösbarer gegenseitiger Verbindung. Diese Verbindung wird beispielsweise über Riegelsteine 33 hergestellt, von denen einer in Fig. 6 zu erkennen ist. Die Auslegung ist so getroffen, daß bei geschlossenem Dach 9 die vorderen Führungslager 23 über die Verbindungsstangen 32 und die zugeordneten Riegelstein-Kupplungen formschlüssig miteinander verbunden sind und daß beim Öffnen des Daches die Kupplungen beginnend mit dem in Öffnungsrichtung vorne liegenden Lamellenpaar 10a, 10b selbsttätig ausrücken bzw. beim Schließen des Daches diese Kupplungen beginnend mit dem in Schließrichtung vorne liegenden Lamellenpaar 10c, 10d selbsttätig einrücken. Zum Ausrücken der Kupplungen können nichtveranschaulichte dachfeste Anschläge vorgesehen sein, auf welche die Verbindungsstangen 32 beim Öffnen des Daches der Reihe nach auftreffen. Die Riegelstein-Schaltkupplungen und ihr Zusammenwirken mit den Verbindungsstangen 32 können beispielsweise so ausgebildet bzw. ausgeführt sein, wie dies im einzelnen in der DE-Patentanmeldung P 41 23 229.1 beschrieben ist. Grundsätzlich kann das Ankuppeln der Lamellen an den gemeinsamen Antrieb (Antriebskabel 28) und das bedarfsweise Abkuppeln der Lamellen von diesem Antrieb aber auch auf beliebige andere Weise, beispielsweise über elektromagnetisch schaltbare Kupplungen, erfolgen.

Wie die Fign. 1 und 3 bis 5 erkennen lassen, ist bei der Ausführungsform gemäß den Fign. 1 bis 6 die Auslegung so getroffen, daß bei geöffnetem Dach die in Dachschließstellung hinterste Lamelle 10a zuunterst und die in Dachschließstellung vorderste Lamelle 10d zuoberst liegt. Dabei sind die Lamellen 10a bis 10d bei geöffnetem Dach einander überlappend in Fahrtrichtung derart gegeneinander versetzt, daß die in Dachschließstellung hinterste Lamelle 10a am weitesten hinten und die in Dachschließstellung vorderste Lamelle am weitesten vorne liegt. Die Lamellen 10a bis 10d sind bei geöffnetem Dach zu einem Paket von relativ geringer Höhe gestapelt, das in einem Raum 34 Platz findet, der sich zwischen der Hinterkante 35 der Dachöffnung 13 und der Oberkante 36 der Heckscheibe 37 befindet (Fig. 4).

Entsprechend Fig. 2 kann im Bereich der Hinterkante 35 der Dachöffnung 13 ein Dichtungsbalg 38 vorgesehen sein, der in allen Zwischenstellungen des Daches ebenso wie bei maximaler Dachöffnung den Spalt zwischen der Unterseite der festen Dachfläche 11 und der in diesem Bereich stehenden Lamelle 10a bis 10d abdichtet. Damit wird verhindert, daß durch diesen Spalt in unerwünschter Weise eine Luftströmung einfällt. Der Dichtungsbalg 38 kann gegebenenfalls mechanisch, pneumatisch oder hydraulich betätigbar sein, um für die gewünschte Dichtwirkung zu sorgen. An Stelle eines wahlweise aufweitbaren Dichtungsbalgs kann auch eine an der Unterseite der festen Dachfläche 11 angebrachte Dichtlippe oder dergleichen vorgesehen sein.

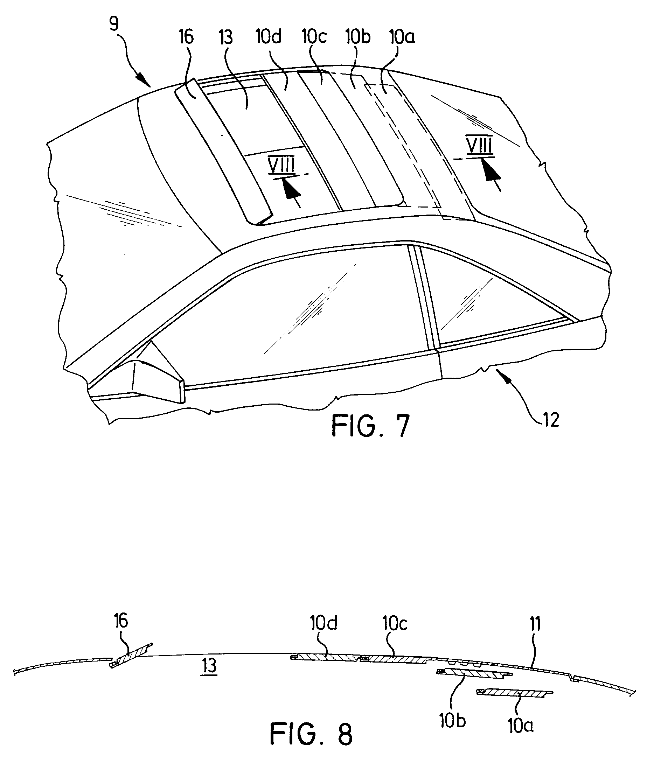

An Stelle der oberen Führungsbahn 19 für die Lamellen 10b bis 10d und der zusätzlichen Führungsbahn 26 für die hinterste Lamelle 10a kann auch eine allen Lamellen 10a bis 10d gemeinsam zugeordnete Führungsbahn 40 vorgesehen sein, die in Fig. 5 in gestrichelten Linien eingezeichnet ist. Beim Öffnen eines derart ausgestalteten Daches wird zunächst die hinterste Lamelle 10a ausgehend von einer mit der nach hinten angrenzenden festen Dachfläche mindestens näherungsweise bündigen Stellung in ihrem hinteren Bereich unter das Niveau der festen Dachfläche 11 geschwenkt. Dann werden der Lamellenverbund (Lamellen 10b bis 10d) und die hinterste Lamelle 10a nach hinten verschoben. Beim weiteren Öffnen des Dachs läßt sich der restliche flächige Lamellenverbund jeweils zunächst nach hinten in eine spaltfreie Zwischenstellung verschieben, in welcher die jeweils letzte Lamelle des Verbundes mit der nach hinten angrenzenden festen Dachfläche mindestens näherungsweise bündig liegt, wie dies in den Fign. 7 und 8 veranschaulicht ist. In diesen spaltfreien Zwischenstellungen ist daher die Dichtfunktion beibehalten. Vor einem weiteren Nachhintenschieben des restlichen flächigen Lamellenverbunds wird die jeweils letzte Lamelle zunächst mit ihrem hinteren Bereich unter das Niveau der festen Dachfläche 31 geschwenkt.

Bei der Ausbildung des Daches gemäß den Fign. 7 und 8 unter Verwendung der alternativen Führungsbahn 40 gemäß Fig. 5 sind zweckmäßig Mittel vorgesehen, die es dem Fahrer gestatten, gezielt die spaltfreien Zwischenstellungen anzusteuern. Bei einem manuellen Dachantrieb kann dies zweckmäßig über eine (nicht näher veranschaulichte) Rastung geschehen. Bei Verwendung eines motorischen Dachantriebs kann eine Vorwahlsteuerung vorgesehen sein, mittels deren sich die spaltfreien Zwischenstellungen wahlweise anfahren lassen.

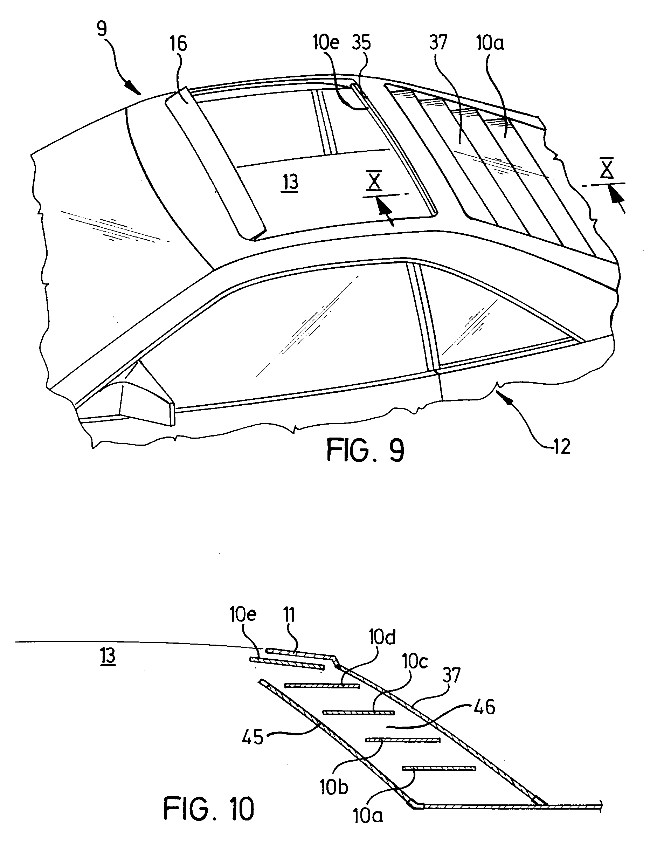

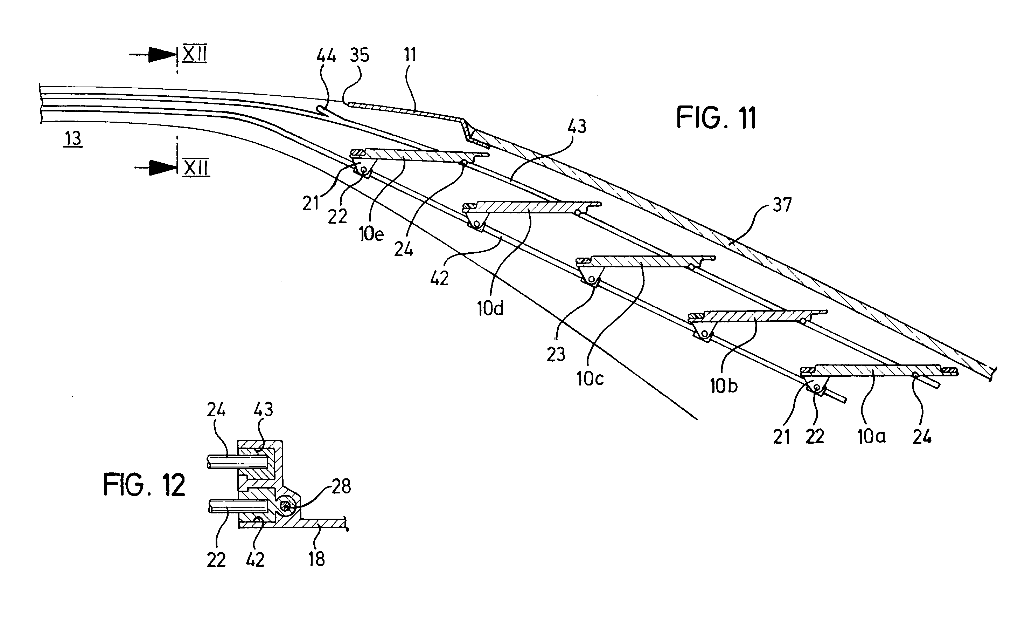

In den Fign. 9 bis 12 ist eine weitere Ausführungsform des Fahrzeugdaches 9 veranschaulicht, bei welcher die in diesem Fall fünf Schiebelamellen 10a bis 10e im Bereich ihrer beiden von den Lenkerbolzen 22 und den Führungsbolzen 24 gebildeten Führungsstellen entlang Führungsbahnen 42 und 43 verschiebbar geführt sind. Diese Führungsbahnen 42 und 43 erstrecken sich nicht nur entlang der Seiten der Dachöffnung 13 und unter dem daran nach hinten anschließenden Bereich der festen Dachfläche 11, sondern sie setzen sich in einem seitlich von der Heckscheibe 37 liegendenden Bereich fort. Abweichend von den zuvor erläuterten Ausführungsformen stehen die vorderen Führungslager 23 aller Lamellen 10a bis 10e mit dem Antriebskabel 28 in fester Antriebsverbindung. Das heißt, alle Lamellen bleiben mit dem Antriebskabel 28 unabhängig von der jeweiligen Dachstellung im vollen Bereich zwischen der Schließstellung des Daches und der Offenstellung des Daches gekoppelt. Von dem nahe der Hinterkante 35 der Dachöffnung 13 liegenden Teil der Führungsbahn 43 für die Führungsbolzen 24 zweigt ein Führungsbahnabschnitt 44 ab, mit welchem der Führungsbolzen 24 nur der hintersten Lamelle 10a zu Beginn des Dachöffnungsvorganges und am Ende des Dachschließvorganges zusammenwirkt. Beim Öffnen des Daches bewirkt der Führungsbahnabschnitt 44 ein Verschwenken der Lamelle 10a um die von dem Lenkerbolzen 22 bestimmte Schwenkachse 15a derart, daß der hintere Bereich dieser Lamelle aus einer mit der festen Dachfläche mindestens näherungsweise bündigen Stellung unter das Niveau der festen Dachfläche geschwenkt wird, um der Lamelle 10a auf diese Weise das Eintauchen unter den festen Dachteil zu ermöglichen. Umgekehrt wird beim Schließen des Daches durch das Zusammenwirken des Führungsbolzens 24 der Lamelle 10a mit dem Führungsbahnabschnitt 44 die hinterste Lamelle 10a zurück in die Stellung verschwenkt, in welcher die Lamelle mit dem Dachabschnitt bündig liegt, der an die Dachöffnung 13 nach hinten anschließt.

Wie insbesondere aus Fig. 9 zu erkennen ist, sind bei dieser Ausführungsform die Lamellen 10a bis 10e bei geöffnetem Dach in gegenseitigem Höhenabstand jalousieartig vor der Heckscheibe 37 angeordnet.

Entsprechend Fig. 10 kann eine durchsichtige Trennwand 45 vorgesehen sein. Die Trennwand 45 befindet sich vor der Heckscheibe 37, und sie begrenzt zusammen mit der Heckscheibe einen Raum 46, innerhalb dessen die Lamellen 10a bis 10e bei geöffnetem Dach aufgenommen werden. Die Trennwand 45 verhindert ein Hineingreifen in die Zwischenräume zwischen die abgesenkten Lamellen. Bei der durchsichtigen Trennwand 45 kann es sich beispielsweise um eine Glasscheibe handeln.

## Patentansprüche

1. Fahrzeugdach mit einer Folge von Lamellen (10a bis 10d, 10a bis 10e) zum wahlweisen Verschließen oder mindestens teilweisen Freigeben einer Dachöffnung (13) in einer festen Dachfläche (11), wobei die Lamellen (10a bis 10d, 10a bis 10e) in der Schließstellung aneinander anstoßen und einen flächigen Lamellenverbund bilden, innerhalb dessen jede Lamelle beidseits an zwei in Verschieberichtung in Abstand voneinander liegenden Führungsstellen (Lenkerbolzen 22, Führungsbolzen 24) entlang von dachfesten Führungen derart geführt ist, daß beim Verstellen der Lamellen (10a bis 10d, 10a bis 10e) der flächige Lamellenverbund eine Translationsbewegung ausführt, im Zuge deren der Verbund an seinem hinteren Ende Lamelle für Lamelle beim Öffnen des Daches (9) aufgelöst bzw. beim Schließen des Daches (9) wiederhergestellt wird, und wobei mindestens die vorderen Führungsstellen (Lenkerbolzen 22) der Lamellen mit einer den Lamellen gemeinsam zugeordneten Führungsbahn zusammenwirken, **dadurch gekennzeichnet,** daß beide Führungsstellen (Lenkerbolzen 22, Führungsbolzen 24) der Lamellen (10a bis 10d, 10a bis 10e) im gesamten Lamellenverstellbereich mit den dachfesten Führungen (Führungsbahnen 19, 20, 26, 40, 42, 43) in Eingriff gehalten sind, und daß die dachfesten Führungen derart ausgebildet und mit Bezug auf die feste Dachfläche (11) angeordnet sind, daß die Lamellen beim Öffnen des Daches (9) unter den an die Dachöffnung (13) nach hinten anschließenden festen Dachteil tauchen.

2. Fahrzeugdach nach Anspruch 1, dadurch gekennzeichnet, daß die Lamellen (10a bis 10d, 10a bis 10e) bei geöffnetem Dach (9) in zueinander mindestens näherungsweise parallelen Ebenen liegen.

3. Fahrzeugdach nach Anspruch 1 oder 2, dadurch gekennzeichnet, daß bei geöffnetem Dach (9) die in Dachschließstellung hinterste Lamelle (10a) zuunterst und die in Dachschließstellung vorderste Lamelle (10d bzw. 10e) zuoberst liegt.

4. Fahrzeugdach nach einem der vorhergehenden Ansprüche, dadurch gekennzeichnet, daß die Lamellen (10a bis 10d, 10a bis 10e) bei geöffnetem Dach (9) einander überlappend in Fahrtrichtung derart gegeneinander versetzt sind, daß die in Dachschließstellung hinterste Lamelle (10a) am weitesten hinten und die in Dachschließstellung vorderste Lamelle (10d bzw. 10e) am weitesten vorne liegt.

5. Fahrzeugdach nach einem der vorhergehenden Ansprüche, dadurch gekennzeichnet, daß mindestens ein Teil der Lamellen (10a bis 10d) mit einem Dachantrieb (Antriebseinheit 31) in Abhängigkeit von der Lamellenstellung selbsttätig kuppelbar bzw. von dem Dachantrieb selbsttätig abkuppelbar ist.

6. Fahrzeugdach nach Anspruch 5, dadurch gekennzeichnet, daß die Lamellen (10a bis 10d) bei geöffnetem Dach (9) zu einem Paket von relativ geringer Höhe gestapelt sind.

7. Fahrzeugdach nach einem der Ansprüche 1 bis 4, dadurch gekennzeichnet, daß die Lamellen (10a bis 10e) in ständiger Verbindung mit einem Dachantrieb (Antriebseinheit 31) stehen.

8. Fahrzeugdach nach Anspruch 7, dadurch gekennzeichnet, daß die Lamellen (10a bis 10e) bei geöffnetem Dach (9) in gegenseitigem Höhenabstand jalousieartig vor der Heckscheibe (37) angeordnet sind.

9. Fahrzeugdach nach Anspruch 8, gekennzeichnet durch eine vor der Heckscheibe (37) angeordnete durchsichtige Trennwand(45), die zusammen mit der Heckscheibe einen Raum(46) begrenzt, innerhalb dessen sich die Lamellen (10a bis 10e) bei geöffnetem Dach befinden.

10. Fahrzeugdach nach einem der vorhergehenden Ansprüche, dadurch gekennzeichnet, daß auch die hinteren Führungsstellen (Führungsbolzen 24) mindestens der bei geschlossenem Dach (9) vor der hintersten Lamelle (10a) liegenden Lamellen (10b bis 10d bzw. 10b bis 10e) mit einer diesen Lamellen gemeinsam zugeordneten Führungsbahn (19, 40, 43) zusammenwirken.

11. Fahrzeugdach nach einem der vorhergehenden Ansprüche, dadurch gekennzeichnet, daß die vorderen Führungsstellen (Lenkerbolzen 22) der Lamellen (10a bis 10d, 10a bis 10e) und die zugehörigen dachfesten Führungen (Führungsbahn 20, 42) tiefer liegen als die hinteren Führungsstellen (Führungsbolzen 24) der Lamellen und die ihnen zugeordneten dachfesten Führungen (19, 40, 43).

12. Fahrzeugdach nach einem der vorhergehenden Ansprüche, dadurch gekennzeichnet, daß mindestens die hinterste Lamelle (10a) zum Auflösen und Wiederherstellen des flächigen Lamellenverbunds um ihre vordere Führungsstelle (Lenkerbolzen 22) schwenkbar gelagert ist.

13. Fahrzeugdach nach Anspruch 12, dadurch gekennzeichnet, daß beim Öffnen des Daches zunächst die hinterste Lamelle (10a) ausgehend von einer mit der nach hinten angrenzenden festen Dachfläche mindestens näherungsweise bündigen Stellung mit ihrem hinteren Bereich unter das Niveau der festen Dachfläche (11) schwenkbar ist und dann der Lamellenverbund und die hinterste Lamelle nach hinten verschiebbar sind.

14. Fahrzeugdach nach Anspruch 13, dadurch gekennzeichnet, daß beim weiteren Öffnen des Dachs (9) der restliche flächige Lamellenverbund jeweils zunächst nach hinten in eine spaltfreie Zwischenstellung verschiebbar ist, in welcher die jeweils letzte Lamelle des Verbundes mit der nach hinten angrenzenden festen Dachfläche (11) mindestens näherungsweise bündig liegt, und daß vor einem weiteren Nachhintenschieben des restlichen flächigen Lamellenverbunds die jeweils letzte Lamelle zunächst mit ihrem hinteren Bereich unter das Niveau der festen Dachfläche schwenkbar ist.

15. Fahrzeugdach nach Anspruch 14, dadurch gekennzeichnet, daß bei Verwendung eines manuellen Dachantriebs die spaltfreien Zwischenstellungen über eine Rastung ansteuerbar sind.

16. Fahrzeugdach nach Anspruch 14, dadurch gekennzeichnet, daß bei Verwendung eines motorischen Dachantriebs (Antriebseinheit 31) die spaltfreien Zwischenstellungen über eine Vorwahlsteuerung anfahrbar sind.

17. Fahrzeugdach nach einem der Ansprüche 1 bis 12, dadurch gekennzeichnet, daß im Bereich der Hinterkante (35) der Dachöffnung (13) eine Dichtungsanordnung (Dichtungsbalg 38) zum Abdichten des Spalts zwischen der festen Dachfläche (11) und der Oberseite der Lamellen (10a bis 10d, 10a bis 10e) bei geöffnetem Dach und in Zwischenstellungen zwischen Schließ- und Offenstellung vorgesehen ist.

18. Fahrzeugdach nach Anspruch 17, dadurch gekennzeichnet, daß die Dichtungsanordnung einen aufweitbaren Dichtungsbalg (38) aufweist.

## Claims

1. A vehicle roof with a series of plates (10a to 10d, 10a to 10e) for selectively closing or at least partially opening a roof opening (13) in a fixed roof surface (11) whereby, in the closed position, the plates (10a to 10d, 10a to 10e) abut one another and form a flat interlocking system of plates within which each plate is, on both sides, so guided along guides rigid with the roof at two guide points (link pins 22, guide bolts 24) which are situated at a distance from one another in the direction of displacement that when the plates (10a to 10d, 10a to 10e) are displaced, the flat system of interlocking plates performs a translatory movement during the course of which the interlocking plate system, at its rear end, is separated plate by plate as the roof (9) is opened and is restored when the roof (9) is closed and whereby at least the forward guide points (link pins 22) of the plates cooperate with a guide-way associated jointly with all plates, characterised in that both guide points (link pins 22, guide bolts 24) of the plates (10a to 10d, 10a to 10e) over the entire range of plate displacement are maintained in engagement with the guides which are rigid with the roof (guide-ways 19, 20 26, 40, 42, 43) and in that the guides rigid with the roof are so constructed and disposed in relation to the roof surface (11) that the plates, during opening of the roof (9), move under the fixed roof part which is rearwardly adjacent the roof opening (13).

2. A vehicle roof according to Claim 1, characterised in that the plates (10a to 10d, 10a to 10e), when the roof (9) is opened, are in planes which are at least approximately parallel with one another.

3. A vehicle roof according to Claim 1 or 2, characterised in that when the roof (9) is opened, the - in he closed position of the roof - rearmost plate (10a) is at the bottom while the plate (10d or 10e) which is foremost in the closed position of the roof is at the top.

4. A vehicle roof according to one of the preceding Claims, characterised in that when the roof (9) is opened, the plates (10a to 10d, 10a to 10e) are so mutually overlappingly offset in relation to one another that the plate (10a) which is farthest to the rear in the closed position of the roof is the farthest rearwards while the plate (10d, 10e) which is farthest forward in the closed position of the roof is the farthest forward.

5. A vehicle roof according to one of the preceding Claims, characterised in that at least one part of the plates (10a to 10d) can as a function of the plate position, be automatically coupled to a roof drive (drive unit 31) or uncoupled from the roof drive automatically.

6. A vehicle roof according to Claim 5, characterised in that when the roof (9) is opened, the plates (10a to 10d) are stacked into a package of relatively minimal height.

7. A vehicle roof according to one of Claims 1 to 4, characterised in that the plates (10a to 10e) are constantly connected to a roof drive (drive unit 31).

8. A vehicle roof according to Claim 7, characterised in that when the roof (9) is opened, the plates (10a to 10d) are arranged in a spaced-apart substantially horizontal parallel relationship with one another in front of the rear windscreen (37).

9. A vehicle roof according to Claim 8, characterised by, disposed in front of the rear windscreen (37), a transparent partition (45) which together with the rear windscreen defines a space (46) within which the plates (10a to 10e) are located when the roof is opened.

10. A vehicle roof according to one of the preceding Claims, characterised in that also the rear guide points (guide bolts 24), at least of the plates (10b to 10d or 10b to 10e) which are in front of the rearmost plate (10a) when the roof (9) is closed, cooperate with a guide-way (19, 40, 43) associated jointly with these plates.

11. A vehicle roof according to one of the preceding Claims, characterised in that the forward guide points (link pins 22) of the plates (10a to 10d, 10a to 10e) and the associated guides which are fixed to the roof (guide-way 20, 42) are situated lower down than the rear guide points (guide bolts 24) of the plates and the guides (19, 40, 43) which are rigid with the roof and are associated with them.

12. A vehicle roof according to one of the preceding Claims, characterised in that in order to separate and restore the flat interlocking system of plates, at least the rearmost plate (10a) is mounted to pivot about its forward guide point (link pin 22).

13. A vehicle roof according to Claim 12, characterised in that upon opening of the roof, first the rearmost plate (10a), starting from a position which is at least approximately flush with the rearwardly adjacent fixed roof surface is adapted to pivot so that its rear portion is below the level of the fixed roof surface 11 after which the interlocking system of plates and the rearmost plate can be displaced rearwardly.

14. A vehicle roof according to Claim 13, characterised in that upon further opening of the roof (9) the rest of the flat interlocking system of plates can in each case be displaced rearwardly into a gap-free intermediate position in which whichever is the last plate of the system is at least approximately flush with the rearwardly adjacent fixed roof surface (11) and in that prior to any further rearwards displacement of the rest of the flat interlocking system of plates whichever is the last plate is firstly pivotable so that its rear portion moves under the level of the fixed roof surface.

15. A vehicle roof according to Claim 14, characterised in that if a manual roof drive is used, it is possible selectively to switch to the gap-free intermediate positions via a catch arrangement.

16. A vehicle roof according to Claim 14, characterised in that if a motorised roof drive (drive unit 31) is used, it is possible to move the gap-free intermediate via a preselect control arrangement.

17. A vehicle roof according to one of Claims 1 to 12, characterised in that in the region of the rear edge (35) of the roof opening (13) there is a sealing arrangement (bellows seal 38) for sealing the gap between the fixed roof surface (11) and the top surface of the plates (10a to 10d, 10a to 10e) when the roof is opened and in midway positions between the closed and open positions.

18. A vehicle roof according to Claim 17, characterised in that the sealing arrangement comprises an expandable bellows seal (38).

## Revendications

1. Toit de véhicule comprenant une suite de lamelles (10a-10d, 10a-10e) pour fermer ou dégager au moins partiellement, de manière sélective, une ouverture (13) dans une surface de toit fixe (11), les lamelles (10a-10d, 10a-10e) butant les unes contre les autres en position de fermeture et formant une combinaison de lamelles à plat à l'intérieur de laquelle chaque lamelle est guidée des deux côtés en deux points de guidage écartés dans la direction de coulissement, par des goujons de bras (22), goujons de guidage (24), le long de guides solidaires du toit de façon qu'en déplaçant les lamelles (10a-10d ; 10a-10e) la combinaison de lamelles à plat exécute un mouvement de translation au cours duquel la combinaison s'ouvre au niveau de son extrémité arrière, lamelle par lamelle, à l'ouverture du toit (9), et est rétablie à la fermeture du toit (9), au moins les goujons de bras (22) des points de guidage avant des lamelles coopérant avec un chemin de guidage commun aux lamelles,
caractérisé en ce que
les deux points de guidage (goujon de bras 22, goujon de guidage 24) des lamelles (10a-10d, 10a-10e) sont maintenus en prise avec les guides solidaires du toit (chemin de guidage 19, 20, 26, 40, 42, 43) pour toute la plage de réglage des lamelles, et les guidages solidaires du toit sont réalisés de façon que par rapport à la surface fixe (11) du toit ils soient disposés pour qu'à l'opération d'ouverture du toit (9), les lamelles pénètrent sous la partie fixe de toit adjacente à l'arrière à l'ouverture de toit (13).

2. Toit de véhicule selon la revendication 1,
caractérisé en ce que
les lamelles (10a-10d, 10a-10e), lorsque le toit (9) est ouvert, sont situées dans des plans au moins approximativement parallèles.

3. Toit de véhicule selon la revendication 1 ou 2,
caractérisé en ce que
le toit (9) étant ouvert, la lamelle (10a) la plus à l'arrière dans la direction de fermeture du toit, soit la lamelle inférieure et la lamelle la plus à l'avant (10d-10e) dans la direction de fermeture du toit, soit la lamelle du dessus.

4. Toit de véhicule selon l'une des revendications précédentes,
caractérisé en ce que
les lamelles (10a-10d, 10a-10e), lorsque le toit (9) est ouvert, sont décalées les unes par rapport aux autres de manière à se chevaucher dans la direction de circulation et la lamelle (10a) la plus à l'arrière dans la position de fermeture du toit est celle qui se trouve la plus à l'arrière et celle (10d ; 10e) la plus à l'avant dans la position de fermeture du toit est la lamelle située le plus à l'avant.

5. Toit de véhicule selon l'une des revendications précédentes,
caractérisé en ce qu'
au moins une partie des lamelles (10a-10d) est couplée automatiquement à un entraînement de toit (unité d'entraînement 31) en fonction de la position des lamelles pour pouvoir être couplée ou découplée automatiquement du moyen d'entraînement équipant le toit.

6. Toit de véhicule selon la revendication 5,
caractérisé en ce que
les lamelles (10a-10d) sont empilées sous la forme d'un paquet de hauteur relative faible lorsque le toit (9) est ouvert.

7. Toit de véhicule selon l'une des revendications 1 à 4,
caractérisé en ce que
les lamelles (10a-10e) sont en liaison permanente avec un moyen d'entraînement de toit (unité d'entraînement 31).

8. Toit de véhicule selon la revendication 7,
caractérisé en ce que
les lamelles (10a-10e), lorsque le toit (9) est ouvert, sont écartées en hauteur les unes par rapport aux autres à la manière d'un store à lamelles, pour se trouver devant la lunette arrière (37).

9. Toit de véhicule selon la revendication 8,
caractérisé par
une cloison (45) transparente placée devant la lunette arrière (37), qui forme avec celle-ci un volume (46) logeant les lamelles (10a-10e) lorsque le toit est ouvert.

10. Toit de véhicule selon l'une des revendications précédentes,
caractérisé en ce qu'
également les points de guidage arrière (goujons de guidage 24), au moins lorsque le toit (9) est fermé, des lamelles (10b-10d ou 10b-10e) situées devant la lamelle arrière (10a), coopèrent avec un chemin de guidage (19, 40, 43) associé en commun aux lamelles.

11. Toit de véhicule selon l'une des revendications précédentes,
caractérisé en ce que
les points de guidage avant (goujons de bras 22) des lamelles (10a-10d, 10a-10e) et les guidages correspondants solidaires du toit (chemins de guidage 20, 42) sont situés plus bas que les points de guidage arrière (goujons de guidage 24) des lamelles et les guidages correspondants solidaires du toit (19, 40, 43).

12. Toit de véhicule selon l'une des revendications précédentes,
caractérisé en ce qu'
au moins la lamelle (10a) la plus à l'arrière est montée pivotante autour de son point de guidage avant (goujon de bras 22) pour ouvrir ou rétablir la combinaison de lamelles à plat.

13. Toit de véhicule selon la revendication 12,
caractérisé en ce qu'
à l'ouverture du toit, tout d'abord la lamelle arrière (10a), partant d'une surface de toit fixe adjacente vers l'arrière, est basculée au moins approximativement dans une position à fleur avec son extrémité arrière sous le niveau de la surface fixe de toit (11), puis la combinaison de lamelles et la lamelle la plus à l'arrière sont coulissantes.

14. Toit de véhicule selon la revendication 13,
caractérisé en ce que
lorsqu'on continue d'ouvrir le toit (9), le reste de la combinaison de lamelles à plat est tout d'abord coulissant vers l'arrière, dans une position intermédiaire ne laissant pas d'intervalle, dans laquelle chaque dernière lamelle de la combinaison est au moins pratiquement à fleur avec la surface de toit fixe, arrière, adjacente (11) et en ce qu'avant d'être coulissée de nouveau vers l'arrière, pour le reste de la combinaison de lamelles à plat, la dernière lamelle respective est tout d'abord basculée avec sa zone inférieure sous le niveau de la surface fixe de toit.

15. Toit de véhicule selon la revendication 14,
caractérisé en ce que
dans le cas d'un entraînement de toit, manuel, les positions intermédiaires sans intervalle sont commandées par l'intermédiaire d'un moyen d'encliquetage.

16. Toit de véhicule selon la revendication 14,
caractérisé en ce que
lorsqu'on utilise un moyen d'entraînement de toit à moteur (unité d'entraînement 31), on arrive par une commande à présélecteur dans les positions intermédiaires sans intervalle.

17. Toit de véhicule selon l'une des revendications 1 à 12,
caractérisé en ce qu'
au niveau de l'arête arrière (35) de l'ouverture de toit (13) il est prévu un dispositif d'étanchéité (soufflet d'étanchéité 38) pour fermer de manière étanche l'intervalle entre la surface de toit fixe (11) et la surface supérieure des lamelles (10a-10d ; 10a-10e) lorsque le toit est ouvert et dans les positions intermédiaires entre la fermeture et l'ouverture.

18. Toit de véhicule selon la revendication 17,
caractérisé en ce que
le dispositif d'étanchéité est un soufflet d'étanchéité (38) extensible.
